# EUROPEAN PATENT APPLICATION

(11) **EP 1 516 657 A1**
(43) Date of publication of application: **23.03.2005**
(21) Application number: 03255338.0
(22) Date of filing: 28.08.2003
(51) Int. Cl.: B01D 25/26

(54) **Laminated modular water filter**

(71) Applicant: Kuo, Joseph, Taichung City (TW)
(72) Inventor: Kuo, Joseph, Taichung City (TW)
(74) Representative: Paget, Hugh Charles Edward

(57) **Abstract**

A laminated modular water filter includes a top plate (20), an intermediate plate (10), and a bottom plate (30), which are annular, each of the top and intermediate plates (20,10) having a bottom surface with an annular lower groove (24,16), each of the intermediate and bottom plates (10,30) having a top surface with an annular upper groove (15,32), and each adjacent pair of the upper and lower grooves (24,15,16,32) in the top, intermediate, and bottom plates (20,10,30) constituting a filter-receiving chamber (6) for receiving a filter unit (40), which includes two filtering films (41,42) disposed between two rotatable nets (50,60) .

## Description

This invention relates to a water filter, and more particularly to a laminated modular water filter.

A conventional laminated modular water filter includes a plurality of filtering films. When dirty water is forced to flow through the filtering films in a forward direction, solid particles suspended within the dirty water are prevented from flowing through the filtering films. When it is desired to clean the filtering films, washing water is forced to flow through the filtering films in a reverse direction so as to remove the solid particles from the filtering films. However, impact of the washing water with respect to the solid particles is too small for effectively removing the latter.

It would be desirable to provide a laminated modular water filter that includes a plurality of filtering films, which can be cleaned effectively.

According to this invention, a laminated modular water filter includes a top plate, at least one intermediate plate, and a bottom plate, which are annular. Each of the top and intermediate plates has a bottom surface with an annular lower groove. Each of the intermediate and bottom plates has a top surface with an annular upper groove. Each adjacent pair of the upper and lower grooves in the top, intermediate, and bottom plates constitute a filter-receiving chamber for receiving a filter unit. Each of the filter units includes two filtering films disposed between two rotatable nets. When washing water is forced to flow from central holes in the top, intermediate, and bottom plates into the chambers, the rotatable nets rotate within the chambers so that solid particles are removed from the filtering films by projections on the rotatable nets.

These and other features and advantages of this invention will become apparent in the following detailed description of a preferred embodiment of this invention, with reference to the accompanying drawings, in which:
Fig. 1 is an assembled perspective view of the preferred embodiment of a laminated modular water filer according to this invention;
Fig. 2 is an exploded perspective view of the preferred embodiment;
Fig. 3 is a sectional view of the preferred embodiment, illustrating flow paths of dirty water and washing water;
Fig. 4 is a fragmentary sectional view of the preferred embodiment, illustrating how two filter units are disposed within an assembly of a top plate and two intermediate plates; and
Fig. 5 is a perspective view of a rotatable net of a filter unit of the preferred embodiment.

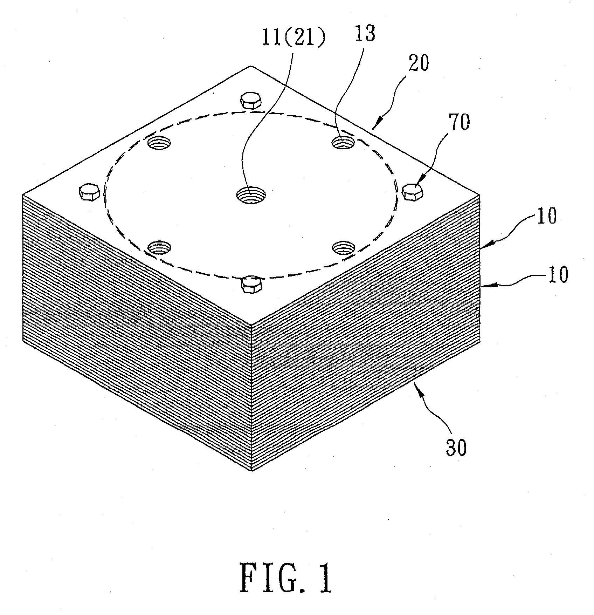

Referring to Figs. 1, 2, 3, and 4, the preferred embodiment of a laminated modular water filter according to this invention is shown to include a plurality of superposed intermediate plates 10, a top plate 2 0, a bottom plate 30, and a plurality of filter units 40.

Each of the intermediate plates 10 has a central hole 11 formed therethrough, an outer peripheral portion 12 with four through holes 13 and four fastener holes 14, a top surface with an annular upper groove 15 formed around the central hole 11 and between the central hole 11 and the through holes 13, a bottom surface with an annular lower groove 16 aligned with the upper groove 15, an upwardly projecting ring 17 disposed between the central hole 11 and the upper groove 15, a downwardly projecting ring 18 disposed between the central hole 11 and the lower groove 16, and two annular outer slots 19 formed respectively in the top and bottom surfaces of the outer peripheral portion 12 and between the through holes 13 and the fastener holes 14. Each of the rings 17, 18 is formed with an annular inner slot 171, 181 for receiving an inner seal ring 172, 182. The outer slots 19 are used to receive a plurality of outer seal rings 191 so as to establish a liquid-tight seal between outer peripheries of each adjacent pair of the intermediate plates 10.

The top plate 20 has a bottom surface that abuts against the top surface of the uppermost intermediate plate 10, and has a central hole 21 formed therethrough, an outer peripheral portion with four through holes 22 formed therethrough, a bottom surface 23 with an annular lower groove 24 formed around the central hole 21, four fastener holes 25 formed through the outer peripheral portion of the top plate 20, a downwardly projecting ring 26 disposed between the central hole 21 and the lower groove 24, and an annular outer slot 27 formed in the outer peripheral portion of the top plate 20 and between the through holes 22 and the fastener holes 25. The downwardly projecting ring 26 is formed with an annular inner slot 261 for receiving an inner seal ring 262. The outer slot 27 and the outer slot 19 in the top surface of the uppermost intermediate plate 10 cooperate to receive an annular outer seal ring 271 so as to establish a liquid-tight seal between an outer periphery of the top plate 20 and the outer periphery of the uppermost intermediate plate 10.

The bottom plate 30 has a central hole 30' formed therethrough, a top surface 31 that abuts against the bottom surface of the lowermost intermediate plate 10 and that is formed with an annular upper groove 32 formed around the central hole 30', an outer peripheral portion with four through holes 33 and four fastener holes 34, anupwardly projecting ring 35 disposed between the central hole 30' and the through holes 33, and an annular outer slot 36 formed in the top surface of the outer peripheral portion of the bottom plate 30 and between the through holes 33 and the fastener holes 34. The upwardly projecting ring 35 is formed with an annular inner slot 351 for receiving an inner seal ring 352. The outer slot 36 and the outer slot 19 in the bottom surface of the uppermost intermediate plate 10 cooperate to receive an annular outer seal ring 361 so as to establish a liquid-tight seal between an outer periphery of the bottom plate 30 and the outer periphery of the lowermost intermediate plate 10.

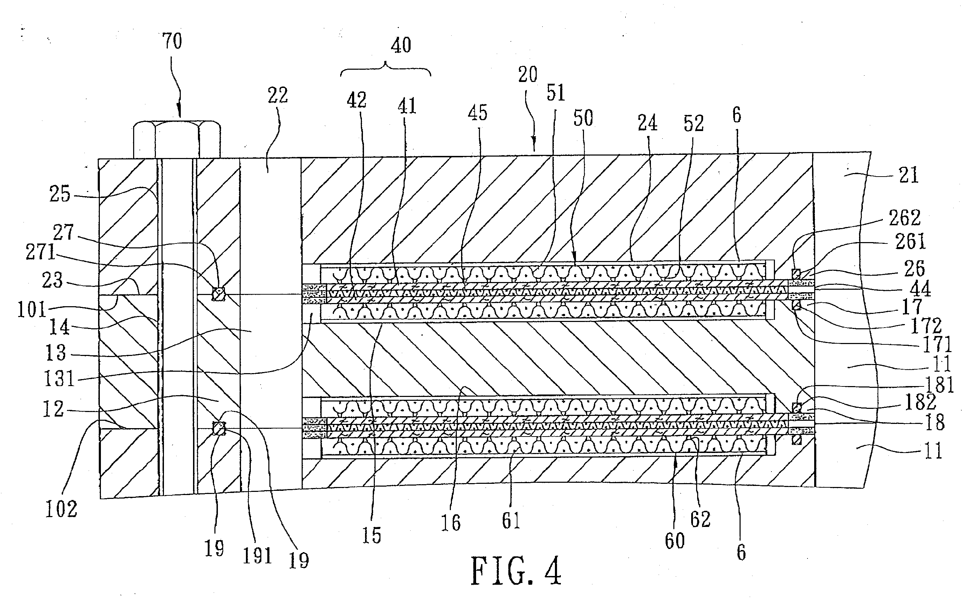

The central holes 21, 11, 30' in the top, intermediate, and bottom plates 20, 10, 30 constitute a central hole unit. The through holes 22, 13 , 33 in the top, intermediate, and bottom plates 20, 10, 30 constitute a through hole unit. Each adjacent pair of the top, intermediate, and bottomplates 20, 10, 30 define a filter-receiving chamber 6 (see Fig. 4) therebetween that are formed from a lower groove 24, 16 in an upper one of the adjacent pair of the top, intermediate, and bottom plates 20, 10, 30 and an upper groove 15, 32 in a lower one of the adjacent pair of the top, intermediate, and bottom plates 20, 10, 30 and that are in fluid communication with the central hole unit and the through hole unit.

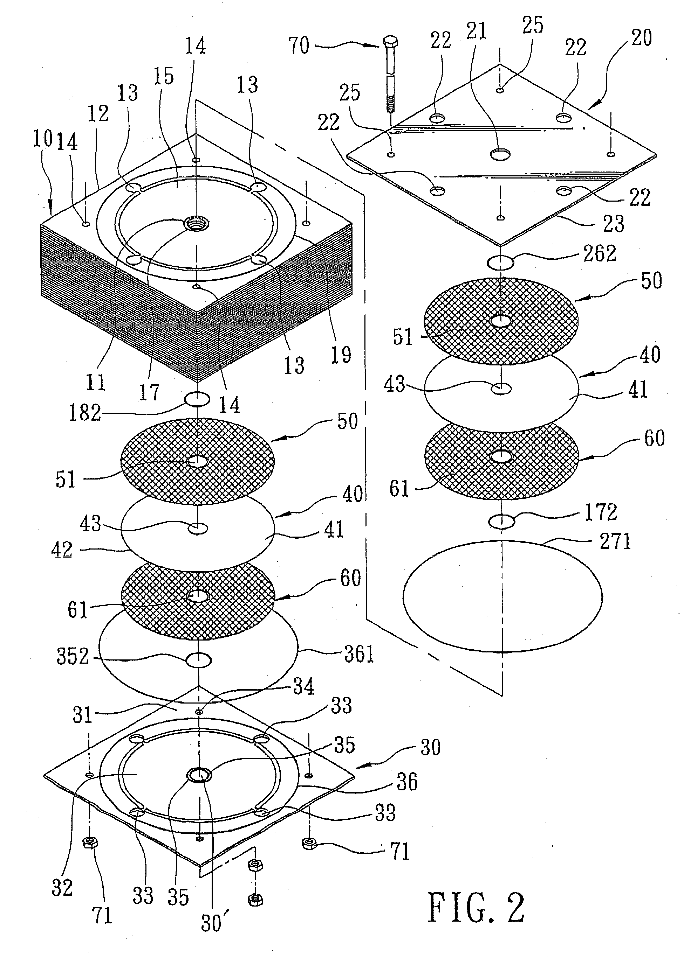

Four bolts 70 extend the fastener holes 25, 14, 34 in the top, intermediate, and bottom plates 20, 10, 30 to engage four nuts 71 (see Fig. 2), respectively.

The filter units 40 are disposed respectively and fittingly within the filter-receiving chambers 6. Each of the filter units 40 includes a film unit consisting of two adjacent parallel filtering films 41, 42, each of which has a central hole 43 that is aligned with and that is in fluid communication with the central hole unit, a filtered water passage 44 defined between the filtering films 41, 42 and in fluid communication with the central hole 43, and a support net layer 45 sandwiched between the filtering films 41, 42 so that filtered water can flow from the corresponding filter-receiving chamber 6 into the central hole unit through the filtered water passage 44.

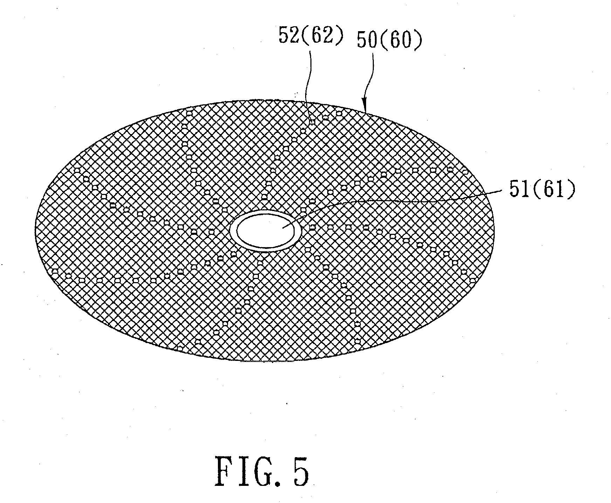

Each of the filter units 40 further includes two rotatable nets 50, 60 parallel to and rotatable relative to the filtering films 41, 42. In each of the filter-receiving chambers 6, the filtering films 41, 42 are disposed between the rotatable nets 50, 60. Each of the rotatable nets 50, 60 has a central hole 51, 61 that is in fluid communication with the central hole unit, and an inner side proximate to the film unit and formed with a plurality of projections 52, 62 (see Fig. 5), which are arranged along a plurality of angularly equidistant curved lines, each of the curved lines extending from an inner periphery of the corresponding rotatable net 50, 60 to an outer periphery of the corresponding rotatable net 50, 60, as shown in Fig. 5.

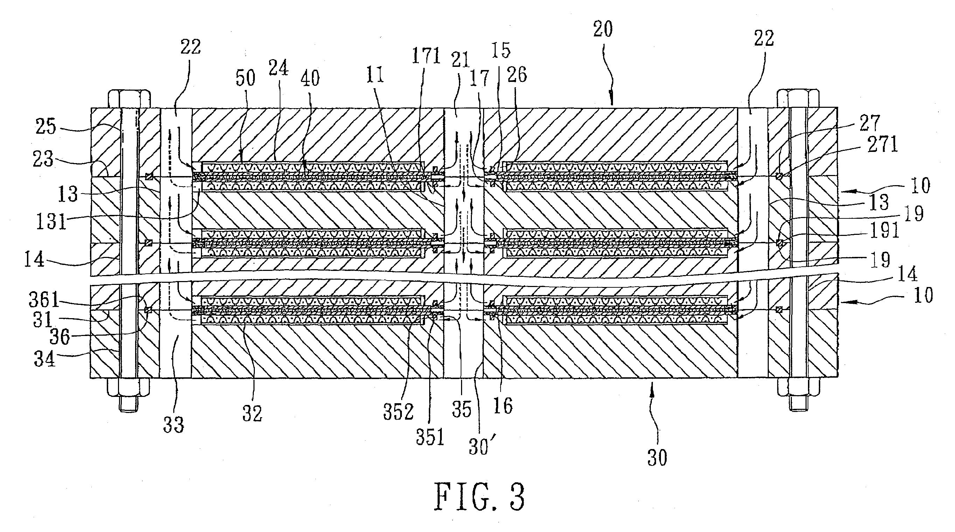

Referring to Fig. 3, when it is desired to filter dirty water, the lower ends of the through holes 33 in the bottom plate 30 are closed, and the dirty water is forced into the upper end of the through holes 22 in the top plate 20. The dirty water flows from the through hole unit into the central hole unit through the filter-receiving chambers 6 along flow paths shown by the solid arrowheads. When the dirty water flows into the filtered water passages 44 through the filtering films 41, 42, solid particles suspended within the dirtywater are prevented from flowing through the filtering films 41, 42.

When it is desired to clean the filtering films 41, 42, the lower end of the central hole 30' in the bottom plate 30 is closed, and washing water is forced into the upper end of the central hole 21 in the top plate 20. The washing water flows from the central hole unit into the filter-receiving chambers 6 along flow paths shown by the broken lines, thereby rotating the rotatable nets 50, 60 relative to the filtering films 41, 42 such that the solid particles are removed from the filtering films 41, 42 by the projections 52, 62.

When the amount of the solid particles suspended within the dirty water is comparatively small, the number of the intermediate plates 10 can be reduced correspondingly. In some conditions, it is likely that only one intermediate plate 10 is sufficient to filter the dirty water.

## Claims

1. A laminated modular water filter **characterised by** a top plate (20), an intermediate plate (10), and a bottom plate (30), which are annular, each of the top and intermediate plates (20,10) having a bottom surface with an annular lower groove (24,16), each of the intermediate and bottom plates (10,30) having a top surface with an annular upper groove (15,32), each adjacent pair of the upper and lower grooves (24,15,16,32) in the top, intermediate, and bottom plates (20,10,30) constituting a filter-receiving chamber (6) for receiving a filter unit (40), which includes two filtering films (41,42) disposed between two rotatable nets (50,60), the arrangement being such that, when washing water is forced to flow from central holes in the top, intermediate and bottom plates (20,10,30) into the chambers (6), the rotatable nets (50,60) rotate within the chambers (6) so that solid particles are removed from the filtering films (41,42) by projections on the rotatable nets (50,60).

2. A laminated modular water filter **characterized by**:
an intermediate plate (10) having a central hole (11) formed therethrough, a top surface with an annular upper groove (15) formed around the central hole (11) in the intermediate plate (10), a bottom surface with an annular lower groove (16) formed around the central hole (11), and a through hole (13) formed through the intermediate plate (10) , the upper and lower grooves (15, 16) in the intermediate plate (10) being located between the central hole (11) in the intermediate plate (10) and the through hole (13) in the intermediate plate (10);
a top plate (20) connected removably to the intermediate plate (10) and having a bottom surface (23) that abuts against the top surface of the intermediate plate (10) so as to establish a liquid-tight seal between outer peripheries of the top and intermediate plates (20, 10) and that is formed with an annular lower groove (24) adjacent to the upper groove (15) in the intermediate plate (10) , a central hole (21) that is formed through the top plate (20) and that is aligned with and that is in fluid communication with the central hole (11) in the intermediate plate (10) , and a through hole (22) that is formed through the top plate (20) and that is in fluid communication with the through hole (13) in the intermediate plate (10) , the through hole (22) in the top plate (20) being adapted to permit introduction of dirty water therethrough;
a bottom plate (30) connected removably to the intermediate plate (10) and having a top surface (31) that abuts against the bottom surface of the intermediate plate (10) in such a manner that a liquid-tight seal is established between an outer periphery of the bottom plate (30) and the outer periphery of the intermediate plate (10) and that is formed with an annular upper groove (32) adjacent to the lower groove (16) in the intermediate plate (10), a central hole (30') that is formed through the bottom plate (30) and that is in fluid communication with the central hole (11) in the intermediate plate (10), and a through hole (33) that is formed through the bottom plate (30) and that is in fluid communication with the through hole (13) in the intermediate plate (10), the through holes (22, 13, 33) in the top, intermediate, and bottom plates (20, 10, 30) constituting a through hole unit, the central holes (21, 11, 20') in the top, intermediate, and bottom plates (20, 10, 30) constituting a central hole unit, each adjacent pair of the upper and lower grooves (24, 15, 16, 32) in the top, intermediate, and bottom plates (20, 10, 30) defining an annular filter-receiving chamber (6) that is in fluid communication with the central hole unit and the through hole unit so as to permit flow of the dirty water from the through hole unit into the central hole unit through the filter-receiving chamber (6); and
two filter units (40) received respectively and fittingly within the filter-receiving chambers (6) , each of the filter units (40) including
a film unit including two adjacent parallel filtering films (41, 42) that define a filtered water passage (44) formed therebetween and that are adapted to prevent solid particles suspended within the dirty water from flowing into the filtered water passage (44) through the filtering films (41, 42), each of the filtering films (41, 42) having a central hole (43) that is in fluid communication with the filtered water passage (44) and the central holes (21, 11, 30') in the top, intermediate, and bottom plates (20, 10, 30), and
two rotatable nets (50, 60) parallel to and rotatable relative to the filtering films (41, 42), the film unit being disposed between the rotatable nets (50, 60), each of the rotatable nets (50, 60) having a central hole (51, 61) that is in fluid communication with the central hole unit, and an inner side proximate to the film unit and formed with a plurality of projections (52, 62).

3. The laminated modular water filter as claimed in Claim 2, **characterized in that** the projections (52, 62) of each of the rotatable nets (50, 60) of the filter units (40) are arranged along a plurality of angularly equidistant curved lines, each of which extends from an inner periphery of a corresponding one of the rotatable nets (50, 60) to an outer periphery of the corresponding one of the rotatable nets (50, 60).

4. A laminated modular water filter **characterized by**:
a plurality of superposed intermediate plates (10) arranged one above another in such a manner that a liquid-tight seal is established between outer peripheries of each adjacent pair of the intermediate plates (10) , each of the intermediate plates (10) having a central hole (11) formed therethrough, a top surface with an annular upper groove (15) formed around the central hole (11) in a corresponding one of the intermediate plates (10), a bottom surface with an annular lower groove (16) formed around the central hole (11), and a through hole (13) formed through the corresponding one of the intermediate plates (10), the upper and lower grooves (15, 16) in the intermediate plates (10) being aligned with one another and being located between the central holes (11) in the intermediate plates (10) and the through holes (13) in the intermediate plates (10);
a top plate (20) connected removably to the intermediate plates (10) and having a bottom surface (23) that abuts against the top surface of an uppermost one of the intermediate plates (10) so as to establish a liquid-tight seal between an outer periphery of the top plate (20) and the outer periphery of the uppermost one of the intermediate plates (10) and that is formed with an annular lower groove (24) adjacent to the upper groove (15) in the uppermost one of the intermediate plates (10), a central hole (21) that is formed through the top plate (20) and that is aligned with and that is in fluid communication with the central hole (11) in the uppermost one of the intermediate plates (10), and a through hole (22) that is formed through the top plate (20) and that is in fluid communication with the through hole (13) in the uppermost one of the intermediate plates (10);
a bottom plate (30) connected removably to the intermediate plates (10) and having a top surface (31) that abuts against the bottom surface of a lowermost one of the intermediate plates (10) in such a manner that a liquid-tight seal is established between, an outer periphery of the bottom plate (30) and the outer periphery of the lowermost one of the intermediate plates (10) and that is formed with an annular upper groove (32) adjacent to the lower groove (16) in the lowermost one of the intermediate plates (10), a central hole (30') that is formed through the bottom plate (30) and that is in fluid communication with the central hole (11) in the lowermost one of the intermediate plates (10), and a through hole (33) that is formed through the bottomplate (30) and that is in fluid communication with the through hole (13) in the lowermost one of the intermediate plates (10), the through holes (22, 13, 33) in the top, intermediate, and bottom plates (20, 10, 30) constituting a through hole unit, the central holes (21, 11, 30') in the top, intermediate, and bottom plates (20, 10, 30) constituting a central hole unit, each adjacent pair of the upper and lower grooves (24, 15, 16, 32) in the top, intermediate, and bottom plates (20, 10,30) defining an annular filter-receiving chamber (6) that is in fluid communication with the central hole unit and the through hole unit so as to permit flow of the dirty water from the through hole unit into the central hole unit through the filter-receiving chambers (6); and
a plurality of filter units (40) received respectively and fittingly within the filter-receiving chambers (6), each of the filter units (40) including
a film unit including two adjacent parallel filtering films (41, 42) that define a filtered water passage (44) formed therebetween and that are adapted to prevent solid particles suspended within the dirty water from flowing into the filtered water passage (44) through the filtering films (41, 42), each of the filtering films (41, 42) having a central hole (43) that is in fluid communication with the filtered water passage (44) and the central holes (21, 11, 30') in the top, intermediate, and bottom plates (20, 10, 30), and
two rotatable nets (50, 60) parallel to and rotatable relative to the filtering films (41, 42), the film unit being disposed between the rotatable nets (50, 60), each of the rotatable nets (50, 60) having a central hole (51, 61) that is in fluid communication with the central hole unit, and an inner side proximate to the film unit and formed with a plurality of projections (52, 62).

5. The laminated modular water filter as claimed in Claim 4, **characterized in that** the projections (52, 62) of each of the rotatable nets (50, 60) of the filter units (40) are arranged along a plurality of angularly equidistant curved lines, each of which extends from an inner periphery of a corresponding one of the rotatable nets (50, 60) to an outer periphery of the corresponding one of the rotatable nets (50, 60).
